# NEW EUROPEAN PATENT SPECIFICATION

(11) **EP 1 728 825 B2**
(45) Date of publication and mention of the opposition decision: **23.10.2013**
(45) Mention of the grant of the patent: 31.03.2010
(21) Application number: 05011908.0
(22) Date of filing: 02.06.2005
(51) Int. Cl.: C08L 63/00, C08L 75/00, C08G 18/10

(54) **Toughened structural epoxy adhesive**
Schlagzähmodifizierter Strukturklebstoff auf Epoxid Basis
Adhesif époxy structurels présentant une résistance aux chocs améliorée

(43) Date of publication of application: 06.12.2006
(73) Proprietor: Dow Global Technologies LLC, Midland, MI 48674 (US)
(72) Inventor: Lutz, Andreas, 8852 Altendorf (CH); Schneider, Daniel, 8804 Au (CH)
(74) Representative: Schaad, Balass, Menzl & Partner AG

(56) References cited:
- EP-A- 0 308 664
- EP-A- 0 457 089
- EP-A- 0 457 089
- EP-A- 0 473 905
- EP-A2- 0 338 985
- WO-A1-96//17880
- WO-A1-2005//007766
- US-A- 3 636 133
- US-A- 5 187 253
- US-A- 5 194 502
- J., FALBE ET AL.: 'Excerpt Römpp Chemie Lexikon', vol. 9, THIEME page 1459
- Excerpt Pubchem "4-(methylamino)phenol", pages 1-10
- Excerpt International Chemical Safety Cards "4-(methylamino)phenol", pages 1-3
- Experimental Report, facsimile letter dated 20.09.2012, pages 6-7, paragraph 2.2.2.1 "Object of the present invention"
- Cited Board of Appeal decision T 190/99

## Description

The present invention relates to a storage-stable, heat-curable structural epoxy adhesive composition, according to claim 1, and a process for bonding together two separate surfaces using such heat curable compositions, according to claim 16.

Tougheners are flexibilizing agents used in curable compositions for giving an improved flexibility and, thus, a higher dynamic strength to the cured product.

Tougheners are particularly useful in structural adhesives. Structural adhesives are adhesives used to bond structural parts of a structure together, such as for the assembly of the parts of a vehicle such as a car, a lorry, a bus or a train. After curing, structural adhesives have to bear both high static and high dynamic loads.

Conventional structural adhesives are epoxy adhesives. Cured epoxy adhesives per se have a relatively high static strength (i.e. a high tensile and a high lap shear strength), but a rather poor dynamic strength (i.e. a low impact peel strength). In order to fulfill the requirements of a crash resistant structural adhesive having a high dynamic strength, a toughener is usually added to structural epoxy adhesives.

Several epoxy adhesive compositions have been described in the state of the art:

US-A-6,015,865 relates to an adhesive composition comprising a liquid and a solid epoxy resin and an amino terminated polyalkylene glycol.

JP-A-02150485 describes an adhesive composed of a gelatinized epoxy resin, a latent curing agent and an electrically conductive material. The epoxy resin may be the capping of an urethane prepolymer with the polyhydric derivative of bisphenol A diglycidylether.

JP-A-02199116 discloses an epoxy resin composition comprising an epoxy compound having an urethane bond and a curing agent.

JP-A-05156227 discloses a structural adhesive obtained by formulating a urethane-modified epoxy resin, an acrylic rubber-modified epoxy resin and/or a polyalkylene ether-modified epoxy resin with a potential curing agent.

JP-B-02749610 discloses a urethane modified epoxy resin giving flexibility to a cured product.

JP-B-07042449 describes a structural adhesive comprising an epoxy resin, a curing agent, a conductive ingredient and a plasticizer.

WO-A-00/20483 relates to epoxy adhesive compositions comprising a conventional rubber-modified epoxy resin and a condensation product of a carboxylic acid dianhydride with a di- or polyamine and a polyphenol or aminophenol.

WO-A-01/94492 describes the condensation products of cyclic carboxylic acid anhydrides and difunctional polyamines and their use as structural constituents for epoxy adhesive compositions.

WO-A-03/078163 discloses a curable adhesive comprising an epoxy based prepolymer, an acrylate terminated urethane resin and a heat activated curing agent.

EP-A-1 431 325 describes an epoxy adhesive composition comprising an epoxy adduct, a polymer of a defined formula, a thixotropic agent and a hardener.

The mechanical properties of the above epoxy adhesive compositions of the state of the art generally do not fully comply with the requirements of a structural adhesive having both a high static and dynamic strength.

EP-A-0 308 664 discloses an epoxy adhesive composition comprising a butadiene-acrylonitrile copolymer in combination with a polyphenol-terminated polyurethane or polyurea as a toughener.

The tougheners described in EP-A-0 308 664 are known to give a high degree of flexibility to the cured product, making them well suited for the use in structural adhesives. These tougheners are however expensive.

It is therefore an object of the present invention to provide a storage-stable heat-curable epoxy adhesive composition comprising a toughener which is less expensive and has excellent toughening properties.

The object is accomplished by a composition comprising a toughener, said toughener comprising an elastomeric prepolymer residue selected from the group of a polyurethane, a polyurea and a polyurea polyurethane having isocyanate end groups, the isocyanate end groups of said prepolymer residue being capped by a secondary aliphatic, cycloaliphatic, and/or heteroaromatic amine and/or a thiol.

The term "araliphatic amines" means the same as the term aralkylamines. The term "capped" means bound to the end of the polymer chain of the elastomeric prepolymer in a manner such that the end to which it is bonded no longer has a reactive group. Thus, the secondary amine is bound to the prepolymer through a urea linkage and the thiol is bound to the prepolymer through a thiourea linkage. The secondary amine and the thiol are called capping compounds. According to claim 1, the elastomeric prepolymer is capped by a secondary aliphatic, cycloaliphatic and/or heteroaromatic amine and/or a thiol. Thus, for one and the same compound the capping compound can be a secondary aliphatic, cycloaliphatic and/or heteroaromatic amine and/or a thiol as well as a mixture of these compounds.

The addition of the compound to a structural adhesive leads to a cured product having an improved lap shear and impact peel strength. Typically, the cured product of a structural adhesive of the present invention comprising the toughener defined in claim 1 and an epoxy resin at least partially modified with a copolymer based on a 1,3-diene and a polar, ethylenically unsaturated comonomer has a lap shear strength of more than 25 MPa and an impact peel strength of more than 30 N/mm. Structural adhesives comprising a compound defined in claim 1 as a toughener have a good storage stability. The structural adhesives also show good bonding to metals with any type of hydrocarbons disposed thereon. Particularly good bonding is achieved on metals having AP 167/22 (of Pfinder) and Anticorit 4107S (of Fuchs) disposed thereon. Both metals are known to a person skilled in the art.

The toughener defined in claim 1 can be prepared at low costs. Moreover, they can be prepared at lower temperatures compared to conventional tougheners.

Preferably, the toughener defined in claim 1 has the structure of formula I 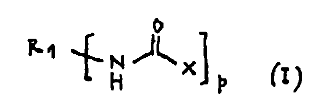 wherein R₁ is the elastomeric prepolymer residue, said residue having a valence of p + q = 2 to 6, and

X is the residue of the secondary aliphatic, cycloaliphatic, and/or heteroaromatic amine and/or the thiol said compound being soluble or dispersible in an epoxy resin.

In a preferred embodiment, X is NR₂R₃ and/or SR₄,
R₂ and R₃ are selected from a straight or branched C₃ to C₂₆ aliphatic or C₅ to C₂₆ cycloaliphatic residue and a heteroaromatic residue and optionally form together a heterocyclic or aliphatic ring, and
R₄ is selected from a straight or branched aliphatic residue, a cycloaliphatic residue, an araliphatic residue and an aromatic residue.

Thus, each of R₂, R₃ and R₄ may be a straight C₃ to C₂₆ aliphatic residue, such as a butyl, propyl or tridecyl residue, or a branched aliphatic residue, such as an isopropyl residue. R₂, R₃ and R₄ may also be a cycloaliphatic residue, such as a cyclohexyl residue or a heteroaromatic residue, such as pyrrol. Optionally, R₂ and R₃ may form a ring as in the compounds of formula I in which X is a heterocyclic secondary amine, such as morpholine or N-alkylpiperidine or imidazol having an active hydrogen atom. R₄ may be an aromatic residue, such as a phenyl or benzyl residue

In a more preferred embodiment, NR₂R₃ is a secondary sterically hindered amine residue, at least one of R₂ and R₃ being of formula II

-CR₅R₆R₇ (II)

wherein at least R₅ and R₆ are independently a C₁ to C₂₁ aliphatic residue, R₅ and R₆ may optionally form a ring and R₇ may be hydrogen.

It is preferred that the elastomeric prepolymer is obtainable by reacting a polyether polyol and/or a polyether polyamine with an excess of polyisocyanate. It is further preferred that during the reaction to obtain the elastomeric prepolymer additionally a polyester diol, a polybutadiene diol and/or a short-chain polyol is co-reacted.

Preferably, the number of carbon atoms of the capping compound is in the range of 4 to 22. In a particularly preferred embodiment, the secondary amine is dicyclohexylamine and/or diisopropylamine. The thiol is preferably 1-dodecanethiol. The toughening effect of these compounds is generally such that the lap shear strength of the cured product is at least 25 MPa and the impact peel strength is higher than 45 N/mm.

The compound of formula I can be prepared by a process comprising
a) reacting a polyether polyol and/or a polyether polyamine with a polyisocyanate in the presence of a catalyst and
b) reacting the product of a) with a secondary aliphatic, cycloaliphatic and/or heteroaromatic amine and/or a thiol.

Preferably, the reaction step a) is carried out at a temperature between 40°C and 120°C, most preferably at a temperature of about 85°C. The polyetherpolyol can for example be a polytetrahydrofurane (PTHF) or a polypropylene oxide (PPO) and the polyisocyanate can for example be hexamethylene-1,6-diisocyanate (HDI).

The catalyst used for the reaction of the polyether polyol and the polyisocyanate can be any catalyst known to a person skilled in the art which catalyses the reaction of isocyanate groups with active hydrogen containing compounds. The catalyst can for example be a bismuth catalyst, such as bismuth carboxylates (e.g. NeoBi 200), a dialkyl tin dicarboxylate, such as a dibutyltin dilaureate catalyst (e.g. Metatin T-712), or a dialkyl tin mercaptide, such as a dibutyltin mercaptide catalyst (e.g. Metatin T-713).

In a preferred process, the secondary amine reacted in step b) is dicyclohexylamine and/or diisopropylamine and the thiol reacted in step b) is preferably 1-dodecanthioi, in accordance with the preferred compounds given above.

The reaction temperature of step b) is preferably between 10°C and 120°C.

In a further preferred embodiment, a polybutadiene diol and/or a polyester diol is additionally added and reacted in step a).

In order to increase the functionality of the prepolymer, a short-chain polyol, such as 1,1,1-trimethylolpropane (TMP) or pentaerythrit, can additionally be added and reacted in step a).

Preferably, the amounts of the components are such that based on the total weight of the composition
a) 25 wt% to 80 wt% of the polyether polyol, up to 35 wt% of the polybutadiene diol, up to 40 wt% of the polyester polyol, up to 5 wt% of the short-chain polyol and 10 wt% to 20 wt% of the polyisocyanate are reacted in the presence of 0.1 wt% to 1 wt% of a catalyst and
b) 2 wt% to 20 wt% of the secondary amine and/or the thiol are added to the mixture obtained in a), corresponding to an amount equimolar to the isocyanate of the prepolymer if there is no reaction step b).

In an optional subsequent step c) 1 wt% to 30 wt% of the phenol and/or the polyphenol are added to the mixture obtained in b), corresponding to a slight molar excess with respect to the remaining isocyanate groups after step b).

The compound defined in claim 1 is used as a toughener in a heat curable epoxy adhesive composition.

Accordingly, the present invention relates to a heat curable epoxy adhesive composition comprising an epoxy resin and a compound as described above. Typical liquid and solid epoxy resins are used such as D.E.R. 330, D.E.R. 331 and D.E.R. 671 (all of The Dow Chemical Company). Preferably, the epoxy resin is used in an amount of 30 to 80 parts, more preferably 40 to 70 parts and most preferably 50 to 60 parts per hundred parts of the adhesive composition.

Likewise, the curable epoxy composition can also be a two-component epoxy adhesive composition.

The present invention relates to a heat curable epoxy adhesive composition wherein at least a part of the epoxy resin is modified with a copolymer based on a 1,3-diene and a polar, ethylenically unsaturated comonomer and/or comprises a core-shell rubber. Preferable copolymers are carboxy terminated butadiene acrylonitrile rubbers, such as Hycar CTBN 1300 X8, 1300 X13 and 1300 X31. More preferably, the heat curable epoxy adhesive composition comprises 5 to 30 wt% of the copolymer modified epoxy resin and/or of the core-shell rubber. Core-shell rubbers are known to a person skilled in the art and are for example described in US-A-5 290 857 and US-A-5 686 509 as well as in EP-A-1 359 202 (paragraph [0037], the disclosure of which is enclosed herewith).

A preferred heat curable epoxy adhesive composition comprises 5 wt% to 40 wt% of the compound of the present invention, more preferably 8 to 30 wt% and most preferably 10 to 25 wt%.

In a preferred embodiment, the heat curable epoxy adhesive composition further comprises one or more additives selected from the group of hardeners, accelerators, adhesion promoters, epoxy silane, fumed silica, wetting agents and inorganic fillers.

For wash-off resistant adhesive compositions, the heat curable epoxy adhesive composition further comprises a thermoplastic polymer comprising a polyester segment, said polymer being at least partially crystalline at room temperature and having a softening temperature in the range of 40° to 125°C. Preferably, the amount of the polymer is from 2 to 20 weight-%, more preferably from 5 to 15 weight-% based on the total weight of the adhesive composition. Such a heat curable epoxy composition has a rather low basic viscosity and, without being pre-cured, a high wash-off resistance.

In a further preferred embodiment, the heat curable epoxy adhesive composition comprises as an accelerator a tertiary polyamine embedded in a polymer matrix. A preferred example is EP 796, i.e. 2,4,6-tris(dimethylaminomethyl)phenol integrated into a poly(p-vinylphenol) matrix as described in EP-A-0 197 892.

When bonding together separate surfaces, the epoxy adhesive composition is applied by common dispensing equipment to at least one surface, the surfaces are brought together and the epoxy adhesive composition is cured at a temperature of 120°C to 210°C.

Thus, the present invention also relates to a process for preparing a cured epoxy adhesive wherein the heat curable epoxy adhesive composition is heated to a temperature of 120°C to 210°C.

### EXAMPLES

### 1. Preparation of a dicyclohexylamine-capped compound according to formula I

### Reaction step a):

72.6 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (NeoBi 200; Shepherd) are mixed at 85°C to homogeneity. Then, 13.1 wt% of hexamethylene-1,6-diisocyanate (HDI; Bayer/Merck) is added and the mixture is allowed to react at 85°C for 1 hour.

### Reaction step b):

13.2 wt% dicyclohexylamine (Merck) is added and the mixture is stirred for additional 20 minutes. Thereby, a dicyclohexylamine-capped compound according to formula I is obtained (Example 1).

### 2. Preparation of a diisopropylamine-capped toughener according to formula I

### Reaction step a):

77.1 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (NeoBi 200; Shepherd) are mixed at 85°C to homogeneity. Then, 14 wt% of hexamethylene-1,6-diisocyanate (HDI; Bayer/Merck) is added and the mixture is allowed to react at 85°C for 1 hour.

### Reaction step b):

7.8 wt% of diisopropylamine (Merck) is added and the mixture is stirred for additional 20 minutes. Thereby, a diisopropylamine-capped compound according to formula I is obtained (Example 2).

### 3. Preparation of a dodecanthiol-capped toughener according to formula I

### Reaction step a):

71.5 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (NeoBi 200; Shepherd) are mixed at 85°C to homogeneity. Then, 12.9 wt% of hexamethylene-1,6-diisocyanate (HDI; Bayer/Merck) is added and the mixture is allowed to react at 85°C for 1 hour.

### Reaction step b):

14.5 wt% of dodecanthiol (Merck) is added and the mixture is stirred for additional 20 minutes. Thereby, a dodecanthiol-capped compound according to formula I is obtained (Example 3).

### 4. Preparation of a compound according to formula I capped with both dicyclohexylamine (80 val%) and allylphenol (20 val%)

### Reaction step a):

73.1 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (NeoBi 200; Shepherd) are mixed at 85°C to homogeneity. Then, 13.2 wt% of hexamethylene-1,6-diisocyanate (HDI; Bayer/Merck) is added and the mixture is allowed to react at 85°C for 1 hour.

### Reaction step b):

10.6 wt% of dicyclohexylamine (Merck) is added and the mixture is stirred for additional 20 minutes.

### Reaction step c):

2 wt% of o-allylphenol (Fluka) is added and the mixture is stirred for additional 20 minutes. Thereby, a compound of formula I capped with both dicyclohexylamine (80 val%) and allylphenol (20 val%) is obtained (Example 4).

### 5. Preparation of a compound according to formula I capped with both diisopropylamine (80 val%) and allylphenol (20 val%)

### Reaction step a):

76.7 wt% (based on the total weight of the resulting composition) of polytetrahydrofurane (PTHF 2000, BASF), 0.5 wt% 1,1,1-trimethylolpropane (TMP; Fluka) and 0.6 wt% of a catalyst (NeoBi 200; Shepherd) are mixed at 85°C to homogeneity. Then, 13.9 wt% hexamethylene-1,6-diisocyanate (HDI; Bayer/Merck) is added and the mixture is allowed to react at 85°C for 1 hour.

### Reaction step b):

6.2 wt% diisopropylamine (Merck) is added and the mixture is stirred for additional 20 minutes.

### Reaction step c):

2.1 wt% o-allylphenol (Fluka) is added and the mixture is stirred for additional 20 minutes. Thereby, a compound of formula I capped with both diisopropylamine (80 val%) and allylphenol (20 val%) is obtained (Example 5).

### 6. Preparation of a compound according to formula I capped with both dodecanthiol (80 val%) and allylphenol (20 val%)

### Reaction step a):

72.2 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (NeoBi 200; Shepherd) are mixed at 85°C to homogeneity. Then, 13.1 wt% of hexamethylene-1,6-diisocyanate (HDI; Bayer/Merck) is added and the mixture is allowed to react at 85°C for 1 hour.

### Reaction step b):

11.7 wt% of dodecanthiol (Merck) is added and the mixture is stirred for additional 20 minutes.

### Reaction step c):

2 wt% of o-allylphenol (Fluka) is added and the mixture is stirred for additional 20 minutes. Thereby, a compound of formula I capped with both dodecanthiol (80 val%) and allylphenol (20 val%) is obtained (Example 6).

### 7. Preparation of a diisopropylamine-capped compound according to formula I based on a polybutadiene diol-containing prepolymer

### Reaction step a):

52.8 wt% (based on the total weight of the resulting composition) of polytetrahydrofurane (PTHF 2000, BASF), 24.5 wt% of polybutadiene diol (PBD, Elf Atochem), 0.5 wt% of 1,1,1-trimethylolpropane (TMP; Fluka) and 0.6 wt% of a catalyst (Metatin T-713; Acima) are mixed at 85°C to homogeneity. Then, 13.7 wt% of hexamethylene-1,6-diisocyanate (HDI; Bayer/Merck) is added and the mixture is allowed to react at 85°C for 1 hour.

### Reaction step b):

7.9 wt% of diisopropylamine (Merck) is added and the mixture is stirred for additional 20 minutes. A diisopropylamine-capped compound according to formula I based on a a polybutadiene diol-containing prepolymer is obtained (Example 7).

### 8. Preparation of a compound according to formula I capped with both diisopropylamine (80 val%) and o,o'-diallylbisphenol A (20 val%)

### Reaction step a):

74.7 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (Metatin T-713; Acima) are mixed at 85°C to homogeneity. Then, 13.5 wt% of hexamethylene-1,6-diisocyanate (HDI; Bayer/Merck) is added and the mixture is allowed to react at 85°C for 1 hour.

### Reaction step b):

6.1 wt% of diisopropylamine (Merck) is added and the mixture is stirred for additional 20 minutes.

### Reaction step c):

4.7 wt% of o,o'-diallylbisphenol A (Huntsman) is added and the mixture is stirred for additional 20 minutes. Thereby, a compound of formula I capped with both diisopropylamine (80 val%) and o,o'-diallylbisphenol A (20 val%) is obtained (Example 8).

### 9. Preparation of a cyclohexylamine-capped compound (comparative)

### Reaction step a):

77.2 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (Metatin T-713; Acima) are mixed at 85°C to homogeneity. Then, 14.0 wt% of hexamethylene-1,6-diisocyanate (HDI; Bayer/Merck) is added and the mixture is allowed to react at 85°C for 1 hour.

### Reaction step b):

7.7 wt% cyclohexylamine (Merck) is added and the mixture is stirred for additional 20 minutes. Thereby, a cyclohexylamine-capped compound according to formula I is obtained (Example 9).

### 10. Preparation of an n-octylamine-capped compound (comparative)

### Reaction step a):

75.4 wt% (based on the total weight of the resulting composition) of polytetrahydrofurane (PTHF 2000, BASF), 0.5 wt% of 1,1,1-trimethylolpropane (TMP; Fluka) and 0.6 wt% of a catalyst (Metatin T-713; Acima) are mixed at 85°C to homogeneity. Then, 13.7 wt% of hexamethylene-1,6-diisocyanate (HDI; Bayer/Merck) is added and the mixture is allowed to react at 85°C for 1 hour.

### Reaction step b):

9.8 wto n-octylamine (Fluka) is added and the mixture is stirred for additional 20 minutes. Thereby, an n-octylamine-capped compound according to formula I is obtained (Example 10).

### 11. Preparation of a diisopropylamine-capped compound according to formula I based on a polyester diol-containing prepolymer

### Reaction step a):

27.9 wt% (based on the total weight of the resulting composition) of polytetrahydrofurane (PTHF 2000, BASF), 51.4 wt% of a polyester diol (Dynacoll 7380, Degussa), 0.4 wt% of 1,1,1-trimethylolpropane (TMP; Fluka) and 0.4 wt% of a catalyst (Metatin T-713; Acima) are mixed at 85°C to homogeneity. Then, 12.0 wt% of hexamethylene-1,6-diisocyanate (HDI; Bayer/Merck) is added and the mixture is allowed to react at 85°C for 1 hour.

### Reaction step b):

7.9 wt% of diisopropylamine (Merck) is added and the mixture is stirred for additional 20 minutes. A diisopropylamine-capped compound according to formula I based on a polyester diol-containing prepolymer is obtained (Example 11).

### 12. Preparation of a diisopropylamine-capped compound according to formula I based on a polyester diol-containing prepolymer

### Reaction step a):

64.6 wt% (based on the total weight of the resulting composition) of polytetrahydrofurane (PTHF 2000, BASF), 13.2 wt% of a polyester diol (Dynacoll 7380, Degussa), 0.5 wt% of 1,1,1-trimethylolpropane (TMP; Fluka) and 0.5 wt% of a catalyst (Metatin T-713; Acima) are mixed at 85°C to homogeneity. Then, 13.4 wt% of hexamethylene-1,6-diisocyanate (HDI; Bayer/Merck) is added and the mixture is allowed to react at 85°C for 1 hour.

### Reaction step b):

7.8 wt% of diisopropylamine (Merck) is added and the mixture is stirred for additional 20 minutes. A diisopropylamine-capped compound according to formula I based on a polyester diol-containing prepolymer is obtained (Example 12). This prepolymer on which the compound is based contains less polyester diol than the one of Example 11 (Example 12).

### 13. Preparation of a diisopropylamine-capped toughener according to formula I based on a polyurea prepolymer

### Reaction step a):

76.7 wt% (based on the total weight of the resulting composition) of a polyoxypropylenediamine (Jeffamine D 2000; Huntsman) and 1.9 wt% of a polyoxypropylenetriamine (Jeffamine T 403; Huntsman) are mixed under cooling to homogeneity. Then, 13.7 wt% of hexamethylene-1,6-diisocyanate (HDI; Bayer/Merck) is added and the mixture is allowed to react under cooling for 10 minutes.

### Reaction step b):

7.8 wt% of diisopropylamine (Merck) is added and the mixture is stirred for additional 10 minutes. Thereby, a diisopropylamine-capped compound according to formula I based on a polyurea prepolymer is obtained (Example 13).

In analogy to Examples 1 to 3, Examples 14 to 22 are prepared by adding in step b) the corresponding compounds given below.

### Example 14: dibutylamine

### Example 15: dipropylamine

### Example 16: ditridecylamine

### Example 17: dibenzylamine (comparative)

### Example 18: diallylamine

### Example 19: ethylcyclohexylamine

### Example 20: N-methylacetamide (comparative)

### Example 21: morpholine

### Example 22: 1-butanethiol

All mixing steps in the above preparation processes are performed under nitrogen.

After reaction step a), the NCO content is measured by back-titration with HCl solution after reacting the polyisocyanate with an excess of dibutylamine.

The number average molecular weight (Mn) of the obtained compounds is determined by gel permeation chromatography (column: PL Gel 3µm Mixed E and PL Gel 5µm Mixed D of Polymer Laboratories; flow: 0.9 ml/min THF; standard: polystyrene).

The results are given in Table 1. As a reference example, the result for DY 965, i.e. a toughener corresponding to example 13 of EP-B-0 308 664, is also given.

**Table 1**

| **Toughener** | **NCO content after reaction step a)** [%] |
|---|---|
| DY 965 | |
| Example 1 | 3.3 |
| Example 2 | 3.4 |
| Example 3 | 3.0 |
| Example 4 | 3.1 |
| Example 14 | 3.2 |
| Example 15 | 3.3 |
| Example 16 | 3.1 |
| Example 17 | 3.1 |
| Example 18 | 3.0 |
| Example 19 | 3.5 |
| Example 20 | 3.0 |
| Example 21 | 3.1 |
| Example 22 | 3.1 |

### Toughening effect of compounds according to formula I

For each of Examples 1 to 22, a heat curable composition comprising 14 wt% of the respective toughening compound of the present invention, 55 wt% of a mixture of epoxy resins D.E.R 330 and D.E.R 671 (both of The Dow Chemical Company), 15 wt% of an acrylonitrile-butadiene rubber, 4.5 wt% of dicyandiamide, 1 wt% of accelerator EP 796, about 5 wt% of fumed silica and about 5 wt% of polyvinylbutyral has been prepared. As a comparative example, an analog composition comprising the toughener DY 965 has been prepared.

A sample of each of the thus prepared heat curable compositions is cured at a temperature of 180°C for 30 minutes.

The lap shear strength and the impact peel strength of the cured product is determined by the following methods:

The lap shear strength was determined at 23°C according to DIN EN 1465 using degreased cold-rolled steel (CRS 1403, 1.5 mm thick) as substrate.

The bonding area was 25 mm x 10 mm, the adhesive layer thickness was 0.2 mm. The test speed was 10 mm/min.

The impact peel strength was determined at 23°C according to ISO 11343 using a degreased cold-rolled steel (CRS 1403, 1 mm thick) as substrate. The bonding area was 30 mm x 20 mm, the adhesive layer thickness was 0.2 mm. The test speed was 2 m/s.

The results are shown in Table 2. The corresponding values of the heat curable composition comprising the toughener DY 965 (RAM 965) is given as a reference example.

**Table 2**

| **adhesive with following compound:** | **lap shear strength** [MPa] | **impact peel strength** [N/mm] | **terminating compound** | **pre-polymer** |
|---|---|---|---|---|
| Example 1 | 31 | 55 | dicylohexylamine | |
| Example 2 | 31 | 63 | diisopropylamine | |
| Example 3 | 31 | 57 | 1-dodecanethiol | |
| Example 4 | 25 | 29 | dicyclohexylamine and o-allylphenol; 80 val%:20 val% | |
| Example 5 | 27 | 52 | diisopropylamine and o-allylphenol; 80 val%:20 val% | |
| Example 6 | 28 | 49 | 1-dodecanthiol and o-allylphenol; 80 val%:20 val% | |
| Example 7 | 28 | 46 | diisopropylamine | containing polybutadiene diol |
| Example 8 | 31 | 53 | diisopropylamine and o,o'-diallylbisphenol A; 80 val%:20 val% | |
| Example 9 (comp.) | 22 | 25 | cyclohexylamine | |
| Example 10 (comp.) | 23 | 17 | n-octylamine | |
| Example 11 | 27 | 14 | diisopropylamine | containing polyester diol |
| Example 12 | 28 | 49 | diisopropylamine | containing polyester diol |
| Example 13 | 28 | 10 | diisopropylamine | polyurea |
| Example 14 | 29 | 53 | dibutylamine | |
| Example 15 | 29 | 52 | dipropylamine | |
| Example 16 | 28 | 40 | ditridecylamine | |
| Example 17 (comp.) | 26 | 29 | dibenzylamine | |
| Example 18 | 27 | 46 | diallylamine | |
| Example 19 | 29 | 57 | ethylcyclohexylamine | |
| Example 20 (comp.) | 26 | 34 | N-methylacetamide | |
| Example 21 | 29 | 53 | morpholine | |
| Example 22 | 29 | 53 | 1-butanethiol | odor |
| DY 965 (reference) | 34 | 48 | o,o'-diallyl bisphenol A | |

Particularly good results in respect of both the lap shear strength and the impact peel strength are obtained when the capping compound (i.e. residue X in formula I) is a sterically hindered secondary amine, such as dicyclohexylamine and diisopropylamine, or a combination of such an amine with o-allylphenol or o,o'diallylbisphenol A. Also, good results are obtained when the capping compound is a thiol such as 1-dodecanethiol. Compounds in which the capping compound is a mixture of dicyclohexylamine and o-allylphenol or o,o'-diallyl bisphenol A, a mixture of diisopropylamine and o-allylphenol or o,o'-diallyl bisphenol A or a mixture of a 1-dodecanethiol and o-allylphenol or o,o'-diallyl bisphenol A are also preferred.

### Lap shear strength on different metals treated with different oils

For Examples 1 to 3, the lap shear strengths at 23°C according to DIN EN 1465 (bonding area: 25 mm x 10 mm; adhesive layer thickness: 0.2 mm) of the corresponding formulations were determined on different metals treated with different oils. As substrates, H340LAD+Z (hot-dipped zinc coated, 0.7 mm thick), DC04-B+ZE (electrogalvanized zinc coated, 0.8 mm thick) and AA6016 (Aluminum, 1.2 mm thick, pretreated using Alodine 2040) were used. The oils used in the tests were AP 167/22 (Pfinder) and Anticorit 4107S (Fuchs). The test speed was 10 mm/min. The results are shown in Table 3. The values are given in MPa.

**Table 3**

| **adhesive with toughener:** | H340LAD+Z AP 167/22 | H340LAD+Z Anticorit 4107S | DC04-B+ZE AP 167/22 | DC04-B+ZE Anticorit 4107S | AA 6016 |
|---|---|---|---|---|---|
| DY 965 | 30 | 30 | 20 | 20 | 26 |
| Example 1 | 30 | 30 | 20.2 | 20.8 | 24.8 |
| Example 2 | 28.4 | 28.6 | 20.3 | 20.8 | 25 |
| Example 3 | 27.2 | 30 | 20.3 | 20 | 23 |

### Impact peel strength on different metals and oils

For examples 1 to 3, the impact peel strengths of the corresponding formulations were determined at 23°C according to ISO 11343 on different metals and oils (bonding area: 30 mm x 20 mm, adhesive layer thickness: 0.2 mm, test speed: 2 m/s). As substrates, H340LAD+Z (0.7 mm thick), DC04-B+ZE (0.8 mm thick) and AA6016 (Aluminum, 1.2 mm thick, pretreated using Alodine 2040) were used.

The oils used in the tests were AP 167/22 (Pfender) and Anticorit 4107S (Fuchs). The results are shown in Table 4. The values are given in N/mm.

**Table 4**

| **adhesive with toughener:** | H340LAD+Z AP 167/22 | H340LAD+Z Anticorit 4107S | DC04-B+ZE AP 167/22 | DC04-B+ZE Anticorit 4107S | AA 6016 |
|---|---|---|---|---|---|
| DY 965 | 40 | 39 | 43 | 40 | 38 |
| Example 1 | 50 | 47 | 49 | 48 | 40 |
| Example 2 | 44 | 47 | 48 | 48 | 36 |
| Example 3 | 46 | 49 | 41 | 46 | 39 |

As can be seen from Table 4, the formulations comprising a compound of the present invention have generally higher impact peel strengths than the formulation comprising the reference toughener DY 965.

### Impact peel strength at low temperature

In a further test, the impact peel strength of the structural adhesive composition comprising the compound of Example 7 has been determined according to ISO 11343 at room temperature and at -40°C (bonding area: 30 x 20 mm, adhesive layer thickness: 0.2 mm, test speed: 2 m/s, substrate: cold-rolled steel, thickness 1mm). As a reference example, the values of the adhesive composition comprising reference toughener DY 965 are also given.

The results are shown in Table 5. The values are given in N/mm.

**Table 5**

| **temperature** | **composition comprising DY 965** | **composition comprising compound acc. to Example 7** |
|---|---|---|
| room temperature | 42 | 49 |
| -40°C | 35 | 39 |

Table 5 shows a superior impact peel strength of the structural adhesive composition of the present invention over the structural adhesive composition comprising the reference toughener.

## Claims

1. A storage-stable, heat-curable structural epoxy adhesive composition comprising
an epoxy resin, at least a part of the epoxy resin being modified with a copolymer based on a 1,3-diene and a polar, ethylenically unsaturated comonomer and/or comprising a core-shell rubber, and
a toughener comprising an elastomeric prepolymer residue selected from the group of a polyurethane, a polyurea and a polyurea polyurethane having isocyanate end groups,
**characterized in that** the isocyanate end groups of said prepolymer residue are capped by a capping compound selected from the group consisting of a secondary aliphatic, cycloaliphatic and heteroaromatic amine, and a thiol, said capping compound being bound to the end of the polymer chain of the elastomeric prepolymer in a manner such that the end to which it is bonded no longer has a reactive group.

2. The composition according to claim 1 wherein the toughener has the structure of Formula I 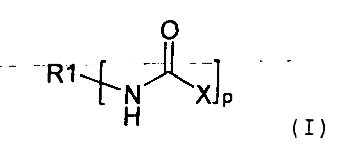 wherein R₁ is the elastomeric prepolymer residue, said residue having a valence of p = 2 to 6, and
X is the residue of the secondary aliphatic, cycloaliphatic, and/or heteroaromatic amine and/or the thiol,
said compound being soluble or dispersible in an epoxy resin.

3. The composition according to claim 2 wherein
X is NR₂R₃ and/or SR₄,
R₂ and R₃ are selected from a straight or branched C₃ to C₂₆ aliphatic or C₅ to C₂₆ cycloaliphatic residue, and a heteroaromatic residue and optionally form together a heterocyclic or aliphatic ring, and
R₄ is selected from a straight or branched aliphatic residue, a cycloaliphatic residue, an araliphatic residue and an aromatic residue.

4. The composition according to claim 3 wherein NR₂R₃ is a secondary sterically hindered amine residue, at least one of R₂ and R₃ being of Formula II
-CR₅R₆R₇ (II)
wherein at least R₅ and R₆ are independently a C₁ to C₂₁ aliphatic residue, R₅ and R₆ may optionally form a ring and R₇ may be hydrogen.

5. The composition according to any of the preceding claims wherein the elastomeric prepolymer is obtainable by reacting a polyether polyol and/or a polyether polyamine with an excess of a polyisocyanate.

6. The composition according to claim 5 wherein during the reaction to obtain the elastomeric prepolymer additionally a polyester diol, a polybutadiene diol and/or a short-chain polyol is co-reacted.

7. The composition according to any of the preceding claims wherein the secondary amine is dicyclohexylamine and/or diisopropylamine.

8. The composition according to any of the preceding claims wherein the thiol is 1-dodecanethiol.

9. The composition according to any of the preceding claims comprising 5 to 30 wt percent of the copolymer modified epoxy resin and/or of the core-shell rubber.

10. The composition according to any of the preceding claims comprising 5 wt percent to 40 wt percent of the toughener.

11. The composition according to any of the preceding claims comprising 8 wt percent to 30 wt percent of the toughener.

12. The composition according to any of the preceding claims comprising 10 wt percent to 25 wt percent of the toughener.

13. The composition according to any of the preceding claims further comprising one or more additives selected from the group of hardeners, accelerators, adhesion promoters, epoxy silane, fumed silica, wetting agents and inorganic fillers.

14. The composition according to any of the preceding claims further comprising a thermoplastic polymer comprising a polyester segment, said polymer being at least partially crystalline at room temperature and having a softening temperature in the range of 40° to 125°C.

15. The composition according to any of the preceding claims further comprising as an accelerator 2,4,6-tris(dimethylaminomethyl)phenol integrated into a poly(p-vinylphenol) matrix.

16. A process of bonding together separate surfaces wherein the storage-stable, heat-curable structural epoxy adhesive composition according to any of the preceding claims is applied to at least one surface, the surfaces are brought together and the structural epoxy adhesive composition is cured at a temperature of 120°C to 210°C.

## Patentansprüche

1. Eine lagerstabile, wärmehärtbare Struktur-Epoxidklebstoff-Zusammensetzung umfassend
ein Epoxidharz, wobei mindestens ein Teil des Epoxidharzes mit einem Copolymer basierend auf einem 1,3-Dien und einem polaren, ethylenisch ungesättigten Comonomer modifiziert ist und/oder ein Core-Shell-Gummi umfasst, und
einen Schlagzähigkeitsmodifikator umfassend einen Rest eines elastomeren Präpolymers ausgewählt aus der Gruppe eines Polyurethans, eines Polyharnstoffes und eines Polyharnstoff-Polyurethans mit IsocyanatEndgruppen,
**dadurch gekennzeichnet, dass** die IsocyanatEndgruppen des besagten Präpolymer-Restes verkappt sind durch eine Verkappungsverbindung ausgewählt aus der Gruppe bestehend aus einem sekundären aliphatischen, cycloaliphatischen und heteroaromatischen Amin, und einem Thiol, wobei besagte Verkappungsverbindung an das Ende der Polymerkette des elastomeren Präpolymers derart gebunden ist, dass das Ende, an das es gebunden ist, keine reaktive Gruppe mehr aufweist.

2. Zusammensetzung gemäss Anspruch 1, **dadurch gekennzeichnet, dass** der Schlagzähigkeitsmodifikator die Struktur der Formel I 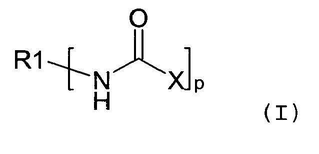 aufweist, wobei R₁ der Rest des elastomeren Präpolymers ist und besagter Rest die Valenz p = 2 bis 6 aufweist und
wobei X der Rest des sekundären aliphatischen, cycloaliphatischen und/oder heteroaromatischen Amins und/oder des Thiols ist,
wobei besagte Verbindung in einem Epoxidharz löslich oder dispergierbar ist.

3. Zusammensetzung gemäss Anspruch 2, **dadurch gekennzeichnet, dass**
X NR₂R₃ und/oder SR₄ ist, wobei
R₂ und R₃ ausgewählt sind aus Wasserstoff, einem linearen oder verzweigten C₃ bis C₂₆ aliphatischen oder C₅ bis C₂₆ cycloaliphatischen Rest und einem heteroaromatischen Rest und optional zusammen einen heterozyklischen oder aliphatischen Ring bilden, und wobei
R₄ ausgewählt ist aus einem linearen oder verzweigten aliphatischen Rest, einem cycloaliphatischen Rest, einem araliphatischen Rest und einem aromatischen Rest.

4. Zusammensetzung gemäss Anspruch 3, **dadurch gekennzeichnet, dass** NR₂R₃ ein sekundärer, sterisch gehinderter Aminrest ist, wobei mindestens einer der Reste R₂ oder R₃ der Formel II
-CR₅R₆R₇ (II)
entspricht, worin mindestens R₅ und R₆ unabhängig ein aliphatischer C₁ bis C₂₁-Rest sind, R₅ und R₆ optional einen Ring bilden können und R₇ Wasserstoff sein kann.

5. Zusammensetzung gemäss einem der vorangehenden Ansprüche, **dadurch gekennzeichnet, dass** das elastomere Präpolymer durch die Reaktion eines Polyether-Polyols und/oder eines Polyether-Polyamins mit einem Überschuss eines Polyisocyanats erhältlich ist.

6. Zusammensetzung gemäss Anspruch 5, **dadurch gekennzeichnet, dass** während der Reaktion zur Herstellung des elastomeren Präpolymers zusätzlich ein Polyesterdiol, ein Polybutadiendiol und/oder ein kurzkettiges Polyol co-reagiert wird.

7. Zusammensetzung gemäss einem der vorangehenden Ansprüche, **dadurch gekennzeichnet, dass** das sekundäre Amin Dicyclohexylamin und/oder Diisopropylamin ist.

8. Zusammensetzung gemäss einem der vorangehenden Ansprüche, **dadurch gekennzeichnet, dass** das Thiol 1-Dodecanthiol ist.

9. Zusammensetzung gemäss einem der vorangehenden Ansprüche umfassend 5 bis 30 Gew.-% des Copolymermodifizierten Epoxidharzes und/oder des Core-Shell-Gummis.

10. Zusammensetzung gemäss einem der vorangehenden Ansprüche umfassend 5 bis 40 Gew.-% des Schlagzähigkeitsmodifikators.

11. Zusammensetzung gemäss einem der vorangehenden Ansprüche umfassend 8 bis 30 Gew.-% des Schlagzähigkeitsmodifikators.

12. Zusammensetzung gemäss einem der vorangehenden Ansprüche umfassend 10 bis 25 Gew.-% des Schlagzähigkeitsmodifikators.

13. Zusammensetzung gemäss einem der vorangehenden Ansprüche zusätzlich umfassend ein oder mehrere Zusatzstoffe ausgewählt aus der Gruppe von Härtern, Beschleunigern, Haftvermittlern, Epoxidsilanen, pyrogener Kieselsäure, Benetzungsmitteln und anorganischen Füllstoffen.

14. Zusammensetzung gemäss einem der vorangehenden Ansprüche zusätzlich umfassend ein thermoplastisches Polymer umfassend ein Polyester-Abschnitt, wobei besagtes Polymer bei Raumtemperatur mindestens teilweise kristallin ist und eine Erweichungstemperatur im Bereich von 40° bis 125°C aufweist.

15. Zusammensetzung gemäss einem der vorangehenden Ansprüche, wobei sie als Beschleuniger zusätzlich 2,4,6-Tris(dimethylaminomethyl)phenol integriert in einer Poly(p-vinylphenol)-Matrix umfasst.

16. Verfahren zum Verbinden getrennter Oberflächen, **dadurch gekennzeichnet, dass** die lagerstabile, wärmehärtbare Struktur-Epoxidklebstoff-Zusammensetzung gemäss einem der vorangehenden Ansprüche auf mindestens eine Oberfläche aufgetragen wird, die Oberflächen zusammengefügt werden, und die Struktur-Epoxidklebstoff-Zusammensetzung bei einer Temperatur von 120°C bis 210°C ausgehärtet wird.

## Revendications

1. Composition d'adhésif structural de type époxy, stable en magasin et durcissable à chaud, comprenant :
- une résine époxy, dont au moins une partie a été modifiée avec un copolymère à base d'un 1,3-diène et d'un comonomère polaire à insaturation éthylénique et/ou qui comprend un caoutchouc de type noyau-coque,
- et un agent de ténacité, comprenant un résidu d'un prépolymère élastomère choisi dans l'ensemble formé par un polyuréthane, une polyurée et un polyurée-polyuréthane, doté de groupes terminaux isocyanate,
et **caractérisée en ce que** les groupes terminaux isocyanate dudit résidu de prépolymère sont coiffés avec un composé coiffe choisi dans l'ensemble constitué par une amine secondaire aliphatique, cycloaliphatique et hétéroaromatique, et un thiol, lequel composé coiffe est attaché à une extrémité de la chaîne polymère du prépolymère élastomère de telle manière que l'extrémité à laquelle il est attaché ne porte plus de groupe réactif.

2. Composition conforme à la revendication 1, dans laquelle l'agent de ténacité est un composé qui possède une structure représentée par la formule I : 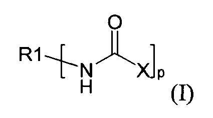 dans laquelle
R1 représente le résidu de prépolymère élastomère, lequel résidu présente une valence p qui vaut de 2 à 6,
et X représente le reste de l'amine secondaire aliphatique, cycloaliphatique et/ou hétéroaromatique, et/ou du thiol,
lequel composé est soluble ou dispersable dans une résine époxy.

3. Composition conforme à la revendication 2, dans laquelle X représente un groupe symbolisé par NR₂R₃ et/ou SR₄,
où R₂ et R₃ représentent des entités qui sont choisies parmi un atome d'hydrogène, un groupe aliphatique en C₃₋₂₆ à chaîne droite ou ramifiée ou cycloaliphatique en C₅₋₂₆, et un groupe hétéroaromatique et qui peuvent, en option, former ensemble un cycle hétérocyclique ou cycloaliphatique,
et R₄ représente une entité choisie parmi un groupe aliphatique à chaîne droite ou ramifiée, un groupe cycloaliphatique, un groupe araliphatique et un groupe aromatique.

4. Composition conforme à la revendication 3, dans laquelle le groupe symbolisé par NR₂R₃ est le reste d'une amine secondaire stériquement encombrée où au moins l'un des symboles R₂ et R₃ représente un groupe de formule (II) :
-CR₅R₆R₇ (II)
dans laquelle au moins R₅ et R₆ représentent indépendamment des groupes aliphatiques en C₁₋₂₁, lesquels groupes représentés par R₅ et R₆ peuvent en option former un cycle, et R₇ peut représenter un atome d'hydrogène.

5. Composition conforme à l'une des revendications précédentes, dans laquelle le prépolymère élastomère est un corps qu'on peut obtenir en faisant réagir un polyéther-polyol et/ou une polyéther-polyamine avec un polyisocyanate en excès.

6. Composition conforme à la revendication 5, pour laquelle, dans la réaction qui permet d'obtenir le prépolymère élastomère, on fait aussi réagir, en plus, un polyester-diol, un polybutadiène-diol et/ou un polyol à chaîne courte.

7. Composition conforme à l'une des revendications précédentes, pour laquelle l'amine secondaire est de la dicyclohexyl-amine et/ou de la diisopropyl-amine.

8. Composition conforme à l'une des revendications précédentes, pour laquelle le thiol est du dodécane-1-thiol.

9. Composition conforme à l'une des revendications précédentes, qui comprend de 5 à 30 % en poids de résine époxy modifiée par copolymère et/ou de caoutchouc de type noyau-coque.

10. Composition conforme à l'une des revendications précédentes, qui comprend de 5 à 40 % en poids de l'agent de ténacité.

11. Composition conforme à l'une des revendications précédentes, qui comprend de 8 à 30 % en poids de l'agent de ténacité.

12. Composition conforme à l'une des revendications précédentes, qui comprend de 10 à 25 % en poids de l'agent de ténacité.

13. Composition conforme à l'une des revendications précédentes, qui comprend en outre un ou plusieurs adjuvant(s) choisi(s) dans l'ensemble constitué par les durcisseurs, accélérateurs de durcissement, promoteurs d'adhésion, époxy-silanes, silice de pyrohydrolyse, agents mouillants et charges inorganiques.

14. Composition conforme à l'une des revendications précédentes, qui comprend en outre un polymère thermoplastique comportant un segment de type polyester, lequel polymère est au moins en partie cristallin à température ambiante et présente une température de ramollissement située dans l'intervalle allant de 40 °C à 125 °C.

15. Composition conforme à l'une des revendications précédentes, qui comprend en outre, en tant qu'accélérateur de durcissement, du 2,4,6-tris(diméthyl-amino-méthyl)phénol, intégré au sein d'une matrice de poly(para-vinyl-phénol).

16. Procédé permettant de coller ensemble des surfaces séparées, dans lequel on applique sur au moins l'une de ces surfaces une composition d'adhésif structural de type époxy, stable en magasin et durcissable à chaud, conforme à l'une des revendications précédentes, on assemble les surfaces, et l'on fait durcir la composition d'adhésif structural de type époxy à une température de 120 °C à 210 °C.
